# FASCICULE DE BREVET EUROPEEN

(11) **EP 1 588 063 B1**
(45) Date de publication et mention de la délivrance du brevet: **11.06.2008**
(21) Numéro de dépôt: 04704262.7
(22) Date de dépôt: 22.01.2004
(51) Int. Cl.: F16C 11/06, B25J 17/02, G02C 5/22

(54) **SYSTEME D'ARTICULATION, NOTAMMENT POUR EQUIPEMENTS UTILISES EN ROBOTIQUE ET MONTURES DE LUNETTES**
GELENKSYSTEM, INSBESONDERE FÜR IN DER ROBOTERTECHNIK UND FÜR BRILLENGESTELLE VERWENDETE VORRICHTUNGEN
HINGE SYSTEM, PARTICULARLY FOR DEVICES USED IN ROBOTICS AND FOR SPECTACLE FRAMES

(30) Priorité: 22.01.2003 FR 0300642
(43) Date de publication de la demande: 26.10.2005
(73) Titulaire: Chene, Richard, 92200 Neuilly-sur-Seine (FR); Delamour, Dominique, 78490 Les Mesnuls (FR); Rodi, Olivier, 78950 Gambais (FR)
(72) Inventeur: Chene, Richard, 92200 Neuilly-sur-Seine (FR); Delamour, Dominique, 78490 Les Mesnuls (FR); Rodi, Olivier, 78950 Gambais (FR)
(74) Mandataire: Sauvage, Renée
(86) Numéro de dépôt international: PCT/FR2004/000135
(87) Numéro de publication internationale: WO 2004/067977

(56) Documents cités:
- FR-A- 2 715 690
- FR-A- 2 746 151
- US-A- 4 785 528

## Description

La présente invention a pour objet un système d'articulation, notamment pour équipements utilisés en robotique et pour montures de lunettes.

Plus précisément, l'invention concerne un système d'articulation entre une extrémité d'un premier élément rigide et une extrémité d'un second élément rigide, du type dans lequel lesdites extrémités présentent des surfaces d'appui aptes à s'appairer respectivement l'une sur l'autre, des moyens élastiques étant prévus pour maintenir l'appui entre lesdites surfaces.

La plupart des équipements utilisés en robotique (robots marcheurs, robots modulaires, robotique manufacturière, robotique médicale, micro-robotique, etc.) sont munis d'articulations permettant un pivotement sur une plage angulaire continue et, souvent, dans une multiplicité de plans. De telles articulations permettent aux équipements d'effectuer, dans l'espace atteignable, une grande variété d'actions et de déplacements. Cependant, les mécanismes de ces articulations sont par nature instables, ou mono-stables en position de repos, et il s'ensuit que ces équipements sollicitent en permanence leur actionneur (par exemple, un vérin de commande) pour les maintenir dans une position choisie, dès qu'il ne s'agit pas de leur position de repos.

Or, un pivotement sur une plage peut n'être ni nécessaire, ni même souhaitable.

Ainsi, en robotique médicale, l'utilisation sur une plage continue des optiques à visées variables n'intéresse pas réellement les chirurgiens. De même, les débattements des endoscopes poly-articulés, tels qu'ils sont utilisés en pratique, avoisinent le "tout ou rien".

En robotique manufacturière, la continuité de la plage de pivotement nuit, en outre, à la précision et à la répétitivité de positionnement dans la durée.

S'agissant des robots marcheurs, ils n'ont pas nécessairement besoin de pattes dont l'espace atteignable soit continu.

En bref, un concept d'articulation discrète réduirait les coûts, limiterait la sollicitation du ou des actionneurs et, dans le cas de la robotique manufacturière, garantirait, dans le temps, la précision du positionnement.

Dans le domaine de la lunetterie, et d'autres (ouvrants d'automobiles, ouvrants de mobilier, par exemple), il est parfois fait usage de charnières dites "élastiques" adaptées à maintenir la partie mobile dans une ou deux positions stables, telles que positions fermée et ouverte d'une branche de lunettes, par exemple.

Ces charnières "élastiques" sont, pour la plupart, munies d'un axe de rotation qui limite le déplacement de la partie mobile à un déplacement dans un plan donné.

On connaît aussi, d'après EP-A-0 886 712, des charnières de lunettes dont les parties mobile et fixe sont reliées par un lien élastique, permettant un déplacement de la partie mobile dans n'importe quel plan, entre des limites fixées, et même un pivotement sur elle-même : ces charnières ont certes un effet séduisant, mais elles sont complexes à fabriquer et à miniaturiser, et leur relative fragilité est mise à rude épreuve par les porteurs qui ont tendance à jouer avec les branches. Ces charnières ne sont pas adaptées à se maintenir dans plusieurs positions stables dans plusieurs plans et/ou à être munies d'un dispositif actionneur qui permettrait de passer d'une position stable à une autre.

On connaît également, d'après US-A-4 785 528, un portique articulé pouvant être manipulé par un robot. Le système d'articulation est conçu pour que l'extrémité du portique se déplace le plus librement possible et cette extrémité peut pivoter sur elle-même.

La présente invention a pour objectif d'apporter une articulation susceptible de permettre à deux éléments rigides (respectivement fixe et mobile) d'occuper diverses positions angulaires relatives stables et/ou instables, précisément déterminées, l'extrémité de l'élément mobile opposée à l'articulation se déplaçant le long de trajectoires linéaires répétitives, sans qu'il soit nécessaire de solliciter l'éventuel dispositif actionneur dont pourrait être munie l'articulation.

Cet objectif est atteint en ce sens que le système d'articulation du type précité comporte deux pièces-pivots présentant, chacune, une zone évidée limitée par une surface au moins en partie courbe, chacune desdites pièces-pivots dépendant respectivement d'un desdits éléments rigides, lesdites pièces-pivots étant sensiblement orthogonales l'une à l'autre, et engagées l'une dans l'autre par interpénétration de leur zone évidée respective de façon à pouvoir pivoter l'une par rapport à l'autre, à la manière des maillons d'une chaîne, de sorte que ledit système comporte deux points de pivotement immatériel mobiles dans les deux plans orthogonaux desdites pièces pivots dans les limites que lui permettent lesdites zones évidées et le système comportant en outre des moyens n'autorisant le pivotement que dans un ou des plans dont le nombre et l'orientation sont déterminés.

En pratique, les pièces-pivots peuvent revêtir, par exemple, la forme d'un anneau, d'une boucle, d'un crochet ou d'une plaque polygonale présentant un évidement limité par une surface au moins partiellement courbe.

Il est avantageux que l'une des pièces-pivots soit fermée (anneau, boucle, etc.) et que l'autre soit ouverte (crochet) car cela peut faciliter le montage ou le démontage, mais des solutions utilisant deux éléments fermés sont également possibles.

La surface au moins partiellement courbe limitant la zone évidée de chacune des pièces-pivots sera le plus souvent circulaire. Cependant, dans certaines applications où l'on souhaite soumettre le pivotement à un effet de came, cette surface peut être elliptique, ou de tout autre forme courbe, y compris une forme irrégulière.

On comprend que les deux points de pivotement immatériels sont écartés d'une distance correspondant sensiblement à la moyenne de l'épaisseur de la matière de chacune desdites pièces-pivots engagées l'une dans l'autre et en contact "surface courbe de zone évidée" contre "surface courbe de zone évidée".

En jouant sur cette épaisseur, on peut donc écarter plus ou moins les deux points de pivotement.

Dans une forme d'exécution particulière de l'invention, l'une au moins des extrémités desdits éléments rigides intègre un logement, ouvert côté articulation, et pourvu d'un tirant dont une extrémité est captive dudit logement et dont l'autre extrémité constitue l'une desdites pièces-pivots, lesdits moyens élastiques coopérant avec ledit tirant pour contraindre les faces d'appui desdits éléments rigides à demeurer en contact l'une avec l'autre.

Les moyens élastiques en question peuvent être constitués par un ressort à boudin, enfilé sur le tirant et prenant appui, d'une part, sur un épaulement prévu dans le logement et ménageant un passage au travers duquel coulisse le tirant et, d'autre part, sur une plaque d'extrémité, de section supérieure à celle dudit passage, et qui rend le tirant captif dudit logement.

Le système peut comporter un tel tirant à ressort dans l'un seulement des éléments rigides ou dans les deux. Lorsqu'il n'en comporte qu'un, un jeu suffisant doit être prévu entre les deux pièces-pivots pour qu'elles puissent remplir leur fonction.

Pour déterminer l'orientation et/ou le nombre de plan(s) autorisés pour le pivotement, l'une au moins des extrémités desdits éléments rigides intègre un logement ouvert côté articulation et la paroi dudit logement présente au moins une encoche axiale dont la géométrie et la taille permettent à une partie de pièce-pivot de pénétrer dans ladite encoche depuis l'extrémité ouverte dudit logement.

Dans une première forme d'exécution possible, il n'est prévu qu'une seule encoche.

Dans une seconde forme d'exécution possible, il est prévu deux encoches dans le même plan, sur les parois opposées du logement.

Le nombre et la position relative des encoches est choisi en fonction du nombre de positions stables voulues et de leur orientation.

De préférence, lesdits éléments de guidage qui canalisent les déplacements de l'élément mobile empêchent ledit élément mobile de pivoter sur lui-même au moins tant qu'il n'occupe pas une position stable.

A cette fin, un relief anti-rotation peut être prévu sur l'une des pièces-pivots et ce relief anti-rotation peut constituer la partie de pièce-pivot susceptible de pénétrer dans la ou les encoches.

Pour faciliter cette pénétration, la paroi du logement présente avantageusement des rampes d'accès à la ou auxdites encoches depuis l'extérieur de l'élément rigide.

Dans une autre forme d'exécution, sur la face extérieure de la paroi du logement et à l'opposé de l'extrémité ouverte de celui-ci, la ou lesdites encoches s'épanouissent en une surface de révolution concave (ou convexe) et l'extrémité de l'autre élément rigide comporte une surface de révolution convexe (ou concave) de taille et de forme complémentaires, ce qui permet de faire tourner l'un des éléments, autour de son axe longitudinal, par rapport à l'autre tandis qu'ils sont en position angulaire stable.

Pour bloquer l'articulation en une position stable, les faces d'appui des deux éléments rigides présentent avantageusement au moins une paire de reliefs complémentaires adaptés à venir en prise dans une position angulaire relative sélectionnée.

Dans une application particulière de l'invention, lesdits éléments rigides sont respectivement une branche et une face de lunettes.

Dans une forme d'exécution particulière de l'invention l'un au moins des éléments rigides comporte, à son extrémité opposée à l'articulation, un moyen de réunion susceptible de venir en prise temporaire avec un moyen de réunion complémentaire prévu sur un autre élément. Il est ainsi possible de réaliser une suite articulée pour un usage en robotique.

L'invention va maintenant être décrite avec davantage de détails par référence aux dessins annexés dans lesquels :
- la figure 1 illustre schématiquement le principe sur lequel repose l'invention ;
- les figures 2a, 2b et 2c illustrent des formes possibles pour les pièces-pivots ;
- les figures 3a, 3b et 3c sont des vues, partiellement en coupe, partiellement en perspective, d'une première forme d'exécution de l'invention, respectivement dans une première position stable, dans une position instable et dans une deuxième position stable ;
- les figures 4a, 4b et 4c sont des vues, partiellement en coupe, partiellement en perspective, d'une deuxième forme d'exécution de l'invention, respectivement dans une première position stable, dans une position instable et dans une deuxième position stable ;
- la figure 5 est une vue en perspective éclatée d'un exemple de tirant ;
- la figure 6 est une vue en perspective des extrémités des éléments rigides de la forme d'exécution des figures 4a-4c ;
- la figure 7 est une vue semblable à la figure 6, montrant une variante ;
- la figure 8 est une vue en perspective des extrémités des éléments rigides montrant une autre variante, les éléments étant démontés ;
- la figure 9 montre les éléments de la figure 8, à l'état monté ; et
- la figure 10 est une vue en perspective d'un "train" articulé mettant en oeuvre l'invention.

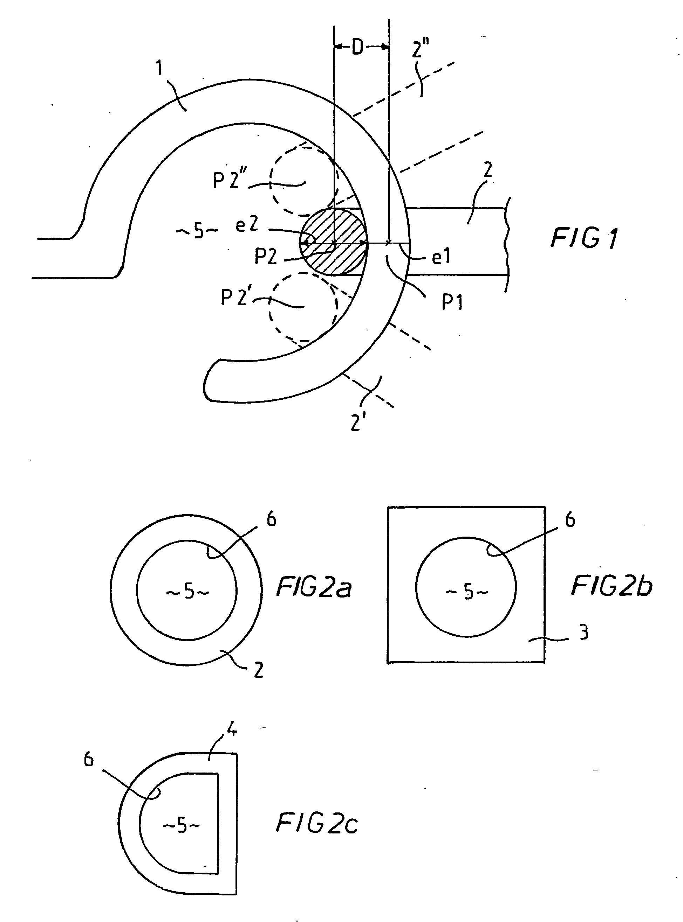

La figure 1 illustre schématiquement le principe sur lequel repose l'invention.

On y voit un crochet 1 enfilé dans un anneau 2, situés, l'un dans le plan de la feuille de dessin, l'autre dans un plan orthogonal à ladite feuille.

L'anneau 2 peut pivoter sur le crochet 1 autour du point P2, avec le point P2 restant dans le plan de la feuille de dessin. Ce faisant, l'anneau 2 passe, par exemple à la position 2' ou 2", avec le point P2 venant, respectivement, en P2' et P2". Le déplacement de l'anneau 2 est "canalisé" par la courbure interne du crochet 1 pour autant que l'anneau 2 soit maintenu appliqué contre le crochet 1. Avec un résultat identique, le crochet 1 peut pivoter sur l'anneau 2, autour du point P1, avec le point P1 restant dans le plan de la feuille de dessin.

En outre, l'anneau 2 peut également pivoter sur le crochet 1 dans toute une série de plans orthogonaux au plan de la feuille de dessin et passant par les différentes positions possibles occupées précédemment par le point P2, tels que P2' et P2", le déplacement du crochet 1 étant canalisé par la courbure interne d de l'anneau 2, pour autant que le crochet 1 soit maintenu appliqué contre l'anneau 2.

P1 et P2 sont donc mobiles dans les limites autorisées respectivement par les moyens de guidage que constituent la courbure interne du maillon 2 et celle du crochet 1 et ils sont espacés d'une distance D qui est égale à la moyenne de l'épaisseur e1 du crochet 1 dans la zone de contact et de l'épaisseur e2 de l'anneau 2 dans cette même zone.

Les figures 2a, 2b et 2c illustrent schématiquement des formes d'exécution possibles et non limitatives des pièces-pivots : en anneau torique 2, en plaque polygonale (carrée) 3 présentant une ouverture, en D inversé 4. La pièce-pivot peut également revêtir la forme d'un crochet 1, comme à la figure 1. Ce qui importe est que la pièce présente un évidement 5 bordé au moins en partie par une surface courbe 6, évidement qui peut être circulaire (figures 2a et 2b), partiellement circulaire (figures 1 et 2c) ou non circulaire.

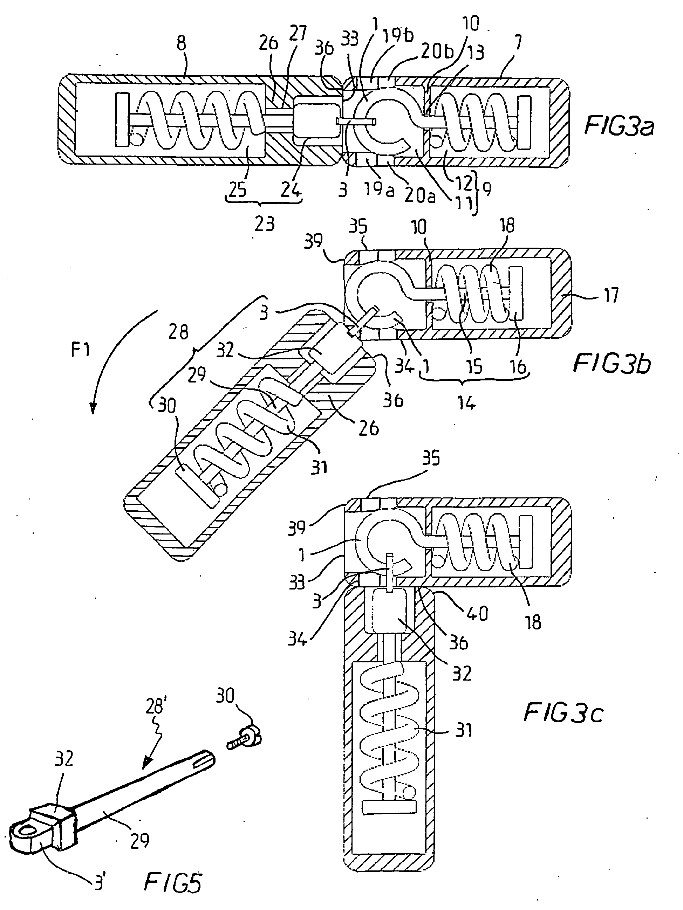

Les figures 3a, 3b et 3c illustrent respectivement une première position stable, une position instable et une deuxième position stable d'une première forme d'exécution de l'invention, observée dans le plan du crochet 1.

Comme il ressort des figures 3a-c, le système d'articulation est monté partiellement dans un premier élément rigide 7, dit "fixe", et partiellement dans un deuxième élément rigide 8, dit "mobile". Il est bien entendu que cette distinction entre élément "mobile" et élément "fixe" peut être artificielle dans la mesure où, dans certains cas, chacun des éléments peut être considéré comme "mobile" par rapport à l'autre.

L'élément fixe 7 définit un logement 9 divisé par une cloison 10 en une partie proximale 11 (proximale par rapport à l'articulation) et une partie distale 12. Un passage 13 est ménagé dans la cloison 10 pour un tirant 14. Le tirant 14 est composé d'une tige 15 dont l'extrémité proximale forme le crochet 1 et dont l'extrémité distale est pourvue d'une pièce d'arrêt 16. Cette pièce d'arrêt 16 peut être la tête d'une vis vissée dans la tige 15, un passage non représenté étant prévu dans le fond 17 du logement 9 pour l'introduction de cette vis et de l'extrémité d'un tournevis. Un ressort à boudin 18 est enfilé sur la tige 15 et prend appui, d'une part, sur la pièce d'arrêt 16, d'autre part, sur la cloison 10. La paroi de la partie proximale 11 du logement 9 présente deux encoches 19a et 19b situées dans le plan du crochet 1, à chacune desquelles fait suite une rampe 20a et 20b.

L'élément mobile 8 comporte, de même, un logement 23 séparé en une partie proximale 24 et une partie distale 25 par une cloison 26, dans laquelle est ménagé un passage 27 pour un tirant 28. Le tirant 28 est composé d'une tige 29 dont l'extrémité proximale est solidaire d'un bloc parallélépipèdique 32, formant organe anti-rotation, de dimensions sensiblement voisines de celles de la partie proximale 24 du logement 23 et qui se prolonge par une plaque carrée 3 présentant un perçage circulaire. A des fins de simplicité, la plaque carrée en question sera, dans la suite, appelée le maillon 3. L'extrémité distale de la tige 29 est pourvue d'une pièce d'arrêt 30 qui, comme la pièce d'arrêt 16, peut être une tête de vis. Un ressort à boudin 31 est enfilé sur la tige 29 et prend appui, d'une part, sur la pièce d'arrêt 30, d'autre part, sur la cloison 26.

L'extrémité proximale de l'élément fixe 7 présente trois face d'appui 33, 34 et 35 et l'extrémité proximale de l'élément mobile 8 présente une face d'appui 36. Les bords 39 et 40 de l'extrémité proximale des éléments fixe et mobile 7 et 8 sont arrondis pour faciliter le mouvement relatif entre les deux éléments.

La tension des ressorts est choisie pour qu'en position stable, le ressort 18 maintienne le crochet 1 en retrait par rapport à la face d'appui 33 et que le ressort 31 maintienne le bloc 32 de telle sorte que sa face proximale affleure la face d'appui 36.

Comme il ressort des figures 3a-c, le crochet 1 est enfilé dans le maillon 3.

A la figure 3a, l'ensemble occupe une première position stable dans laquelle les éléments fixe 7 et mobile 8 sont dans l'alignement l'un de l'autre, la face d'appui 36 de l'élément mobile 8 étant appliquée contre la face d'appui 33 de l'élément fixe. Dans cette position, le crochet 1 est en retrait par rapport à la face d'appui 33 et le maillon 3 est reçu dans la partie proximale 11 du logement 9 de l'élément fixe 7.

A la figure 3b, l'élément mobile 8 a été "déboîté" par rapport à la position qu'il occupait à la figure 3a pour pouvoir pivoter selon la flèche F1. Ce déboîtement est rendu possible par une traction exercée par le maillon 3 sur le crochet 1, à l'encontre de la force des ressorts 18 et 31 qui s'en trouvent comprimés. On peut voir que le crochet 1 affleure maintenant la face d'appui 33 et que le bloc 32 fait légèrement saillie hors de l'élément mobile 8. Le pivotement est également rendu possible par la présence de l'encoche 19a qui autorise le passage du maillon 3 et du bloc 32.

A la figure 3c, la face d'appui 36 de l'élément mobile 8 est maintenant appliquée contre la face d'appui 34 de l'élément fixe 7. Le crochet 1 et le bloc 32 ont repris leurs positions de la figure 3a et les ressorts 18 et 31 sont également revenus à leur degré de tension initial. Le maillon 3 est en contact avec la rampe 20a par sa tranche non visible, tandis que sa tranche visible est en contact avec une autre rampe, non visible, symétrique à la rampe 20a.

On comprend que, l'élément fixe 7 comportant une deuxième encoche 19b à l'opposé de l'encoche 19a, l'élément mobile 8 pourrait être amené dans une troisième position stable, à savoir avec sa face d'appui 36 appliquée contre la face d'appui 35 de l'élément fixe 7.

Un tirant 28', semblable au tirant 28, est représenté isolément à la figure 5. On y retrouve la tige 29, le bloc anti-rotation 32, un maillon 3', légèrement différent du maillon 3, et la tête de vis 30.

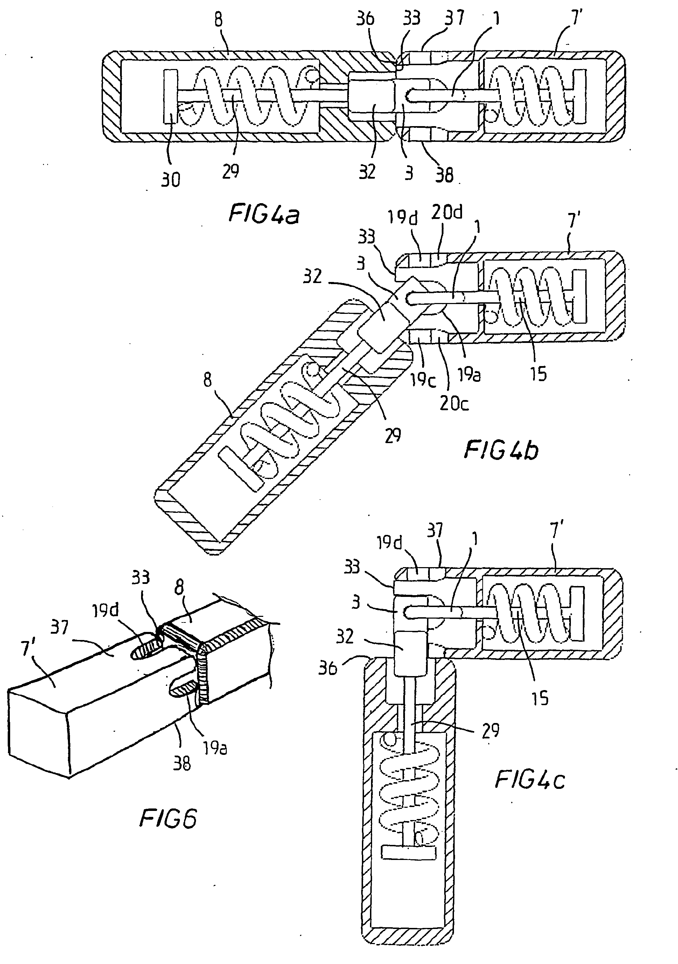

Les figures 4a, 4b et 4c illustrent respectivement une première position stable, une position instable et une deuxième position stable d'une deuxième forme d'exécution de l'invention, observée, cette fois, dans le plan du maillon 3.

La forme d'exécution des figures 4a-c diffère de celle des figues 3a-c par le fait que l'élément fixe 7' comporte cinq faces d'appui, à savoir une face d'appui en bout 33 comme dans la forme d'exécution précédente, et quatre faces d'appui latérales, dont deux seulement 37 et 38 sont visibles sur les figures. Les deux autres sont situées comme les faces d'appui 34 et 35 de l'élément 7. Il s'ensuit que l'élément rigide 7' comporte quatre encoches dont trois sont visibles, 19a, 19c et 19d, encoches auxquelles font suite des rampes telles que 20c et 20d.

La configuration de l'élément fixe 7' ressort plus clairement de la figure 6. On y voit que l'élément fixe 7' comporte une face d'appui en bout 33 et quatre faces d'appui latérales dont deux seulement 37 et 38 sont visibles sur la figure. Les deux autres faces d'appui sont respectivement à l'opposé des faces 37 et 38. Une encoche, telle que 19a, 19d, est ménagée dans chaque face d'appui latérale, les encoches de deux faces opposées étant situées dans le même plan. Cette forme d'exécution offre donc deux plans de débattement et cinq positions stables : éléments 7' et 8 alignés, ou éléments 7' et 8 à 90°, dans l'une des quatre positions possibles.

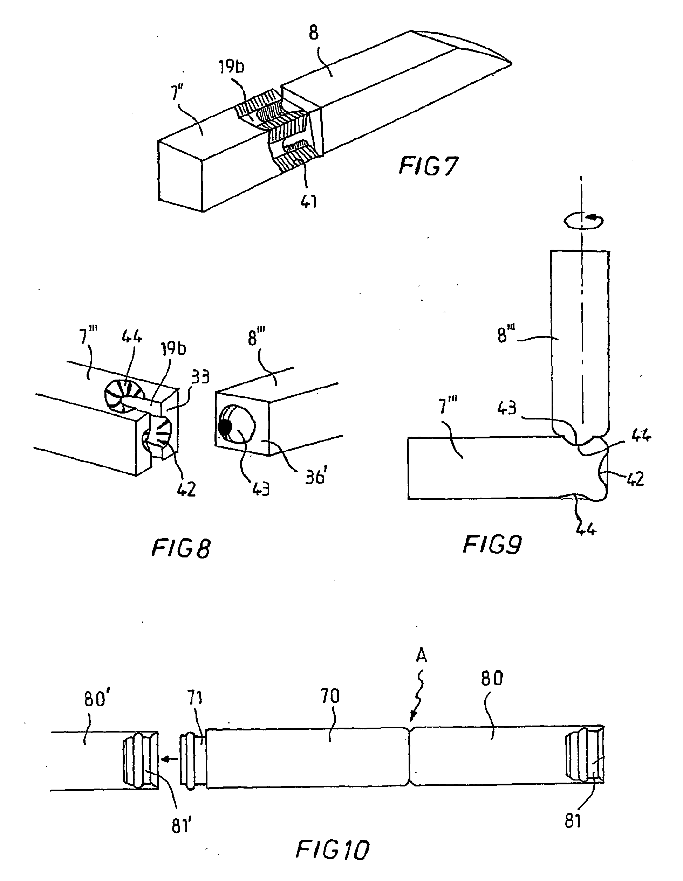

La figure 7 illustre une variante d'exécution de la forme d'exécution de la figure 6, où l'on retrouve un élément fixe 7" et un élément mobile 8', mais dans laquelle des rampes, telles que 41, sont ménagées sur le long des bords des encoches, telles que 19b, pour faciliter la pénétration et le guidage du maillon 3 dans lesdites encoches.

La figure 8 illustre une autre variante dans laquelle la face d'appui en bout 33 de l'élément fixe 7"' présente un relief concave 42 de taille et géométrie correspondant à celles d'un relief convexe 43 prévu sur la face d'appui 36' de l'élément mobile 8"'. De même, chaque encoche, telle que 19b, s'épanouit en un relief concave 44 de taille et géométrie correspondant à celles du relief convexe 43. Comme il ressort de la figure 9, cette disposition permet à l'élément mobile 8"' de tourner autour de son axe longitudinal, dans l'une quelconque de ses positions stables. Naturellement, dans ce cas, le tirant inclus dans l'élément 8"' est dépourvu de bloc anti-rotation. Une telle forme d'exécution est utilisable, par exemple, dans la fabrication d'un endoscope.

La figure 10 illustre une application possible de l'invention, à savoir la réalisation d'un "train" articulé d'éléments. Les éléments 70 et 80 sont articulés en A selon l'invention et, l'un, tel que 70, présente un filetage mâle 71, tandis que l'autre, tel que 80, présente un filetage femelle 81. Le filetage mâle 71 est susceptible de venir en prise avec un filetage femelle 81' prévu dans un autre élément 80', semblable à l'élément 80, ou d'une autre nature, par exemple une liaison à une caméra, un capteur, etc. Un tel train articulé d'éléments est susceptible d'être utilisé en robotique médicale, par exemple.

Il est bien entendu que la présente invention n'est pas limitée aux formes d'exécution décrites et représentées. En particulier, bien que ces formes d'exécution montrent des articulations susceptibles d'avoir, en plus de la position alignée stable, deux ou quatre positions angulaires (latérales) stables, elles pourraient n'en avoir qu'une, par exemple dans l'application de l'articulation à une monture de lunettes.

Par ailleurs, il peut être prévu des moyens permettant de régler la force des ressorts pour empêcher les faces d'appui des éléments rigides de se décoller l'une de l'autre, la force de pression des ressorts pouvant faire office de moyen de freinage afin de bloquer l'articulation dans la configuration désirée.

Dans une forme d'exécution particulière, il est enfin possible d'intégrer des dispositifs de commande, de mesure de position et de transmission d'information dans un volume limité du corps de l'un des éléments rigides, pour permettre le développement de milli-robots ou de micro-robots.

## Revendications

1. Système d'articulation comportant au moins un point de pivotement entre une extrémité d'un premier élément rigide (7) et une extrémité d'un second élément rigide (8), lesdites extrémités présentant des faces d'appui aptes à s'appairer respectivement l'une sur l'autre, des moyens élastiques étant prévus pour maintenir l'appui entre lesdites faces, **caractérisé en ce que** ledit système comprend deux pièces-pivots (1,2) présentant, chacune, une zone évidée limitée par une surface (6) au moins en partie courbe, chacune desdites pièces-pivots dépendant respectivement d'un desdits éléments rigides, lesdites pièces-pivots étant sensiblement orthogonales l'une à l'autre, et engagées l'une dans l'autre par interpénétration de leur zone évidée respective de façon à pouvoir pivoter l'une par rapport à l'autre, à la manière des maillons d'une chaîne, de sorte que ledit système comporte deux points de pivotement (P1, P2) immatériels mobiles dans les deux plans orthogonaux desdites pièces-pivots (1, 2) dans les limites que lui permettent lesdites zones évidées (6), et ledit système comportant, en outre, des moyens (19a-c) n'autorisant le picotement que dans un ou des plans dont le nombre et l'orientation sont déterminés.

2. Système d'articulation selon la revendication 1, **caractérisé en ce que** lesdites pièces-pivots revêtent la forme d'un anneau (2), d'une boucle, d'un crochet (1) ou d'une plaque polygonale (3) présentant un évidement (5) limité par une surface (6) au moins partiellement courbe.

3. Système d'articulation selon la revendication 1 ou 2, **caractérisé en ce que** la surface au moins partiellement courbe (6) limitant la zone évidée de chacune des pièces-pivots est circulaire.

4. Système d'articulation selon l'une quelconque des revendication 1 à 3, **caractérisé en ce que** l'une au moins des extrémités desdits éléments rigides (7,8) intègre un logement (9,23), ouvert côté articulation, et pourvu d'un tirant (14,28) dont une extrémité (16,30) est captive dudit logement et dont l'autre extrémité (1,2) constitue, l'une desdites pièces-pivots, lesdits moyens élastiques (18,31) coopérant avec ledit tirant pour contraindre les faces d'appui (33,36; 34,36; 35,36) desdits éléments rigides à demeurer en contact l'une avec l'autre.

5. Système d'articulation selon l'une quelconque des revendications 1 à 4, **caractérisé en ce que** l'une au moins des extrémités desdits éléments rigides (1,2) intègre un logement ouvert côté articulation et la paroi dudit logement présente au moins une encoche axiale (19a,19b) dont la géométrie et la taille permettent à une partie de pièce-pivot (32) de pénétrer dans ladite encoche depuis l'extrémité ouverte dudit logement

6. Système d'articulation selon l'une quelconque des revendications 1 à 5, **caractérisé en ce qu'**un relief anti-rotation (32) est prévu sur l'une des pièces-pivots.

7. Système d'articulation selon la revendication 6, **caractérisé en ce que** ledit relief anti-rotation (32) constitue la partie de pièce-pivot susceptible de pénétrer dans la ou les encoches.

8. Système d'articulation selon l'une quelconque des revendications 5 à 7, **caractérisé en ce que** ladite paroi présente des rampes d'accès (41) à ladite encoche depuis l'extérieur de l'élément rigide.

9. Système d'articulation selon l'une quelconque des revendications 5 à 8, **caractérisé en ce que**, sur la face extérieure de ladite paroi et à l'opposé de l'extrémité ouverte du logement, ladite encoche s'épanouit en une surface de révolution concave (44) (ou convexe) et **en ce que** l'extrémité de l'autre élément rigide comporte une surface de révolution convexe (43) (ou concave) de taille et de forme complémentaires.

10. Système d'articulation selon l'une-quelconque des revendications 1 à 9, **caractérisé en ce que** lesdits faces d'appui présentent au moins une paire de reliefs complémentaires adaptés à venir en prise dans une position angulaire relative sélectionnée des deux éléments rigides (7,8).

11. Système d'articulation selon l'une quelconque des revendications 1 à 10, **caractérisé en ce que** lesdits éléments rigides (7,8) sont respectivement une branche de lunettes et une face de lunettes.

12. Système d'articulation selon l'une quelconque des revendications 1 à 10, **caractérisé en ce que** l'un au moins des éléments (70) comporte, à son extrémité opposée à l'articulation (A), un moyen de réunion (71) susceptible de venir en prise temporaire avec un moyen de réunion complémentaire (81') prévu sur un autre élément (80').

13. Système d'articulation selon l'une quelconque des revendications 1 à 10 et 12, **caractérisé en ce que** lesdits éléments rigides appartiennent à une suite articulée pour un usage en robotique.

## Claims

1. A system of articulation comprising at least one pivot point between one end of a first rigid element (7) and one end of a second rigid element (8), said ends having bearing faces fit for pairing up respectively one on top of the other, elastic means being provided to maintain the bearing contact between said faces, **characterized in that** said system comprises two pivot parts (1, 2), each having a recessed zone limited by an at least partially curved surface (6), each of said pivot parts depending respectively on one of said rigid elements, said pivot parts being substantially orhtogonal to each other, and engaged one in the other through interlocking of their respective recessed zone, such as to be able to pivot relative to each other in the manner of the links of a chain, with the result that said system comprises two intangible pivot points (P1, P2) movable in the two orthogonal planes of said pivot parts (1, 2) within the limits permitted it by said recessed zones (6), and said system additionally comprising means (19a-c) which allow pivoting only in one or some planes, the number and orientation of which are defined.

2. The system of articulation as claimed in claim 1, **characterized in that** said pivot parts take the form of a ring (2), a loop, a hook (1) or a polygonal plate (3), having a recess (5) limited by an at least partially curved surface (6).

3. The system of articulation as claimed in claim 1 or 2, **characterized in that** the at least partially curved surface (6) limiting the recessed zone of each of the pivot parts is circular.

4. The system of articulation as claimed in any one of claims 1 to 3, **characterized in that** one at least of the ends of said rigid elements (7, 8) incorporates a receptacle (9, 23), open on the articulation side and provided with a tie rod (14, 28), one end (16, 30) of which is held captive in said receptacle and the other end (1, 2) of which constitutes one of said pivot parts, said elastic means (18, 31) cooperating with said tie rod in order to force the bearing faces (33, 36; 34, 36; 35,36) of said rigid elements to remain in contact one with the other.

5. The system of articulation as claimed in any one of claims 1 to 4, **characterized in that** one at least of the ends of said rigid elements (1, 2) incorporates a receptacle, open on the articulation side, and the wall of said receptacle has at least one axial notch (19a, 19b), the geometry and size of which allow a pivot part portion (32) to penetrate into said notch from the open end of said receptacle.

6. The system of articulation as claimed in any one of claims 1 to 5, **characterized in that** an anti-rotation relief (32) is provided on one of the pivot parts.

7. The system of articulation as claimed in claim 6, **characterized in that** said anti-rotation relief (32) constitutes the pivot part portion capable of penetrating into the notch(es).

8. The system of articulation as claimed in any one of claims 5 to 7, **characterized in that** said wall has access ramps (41) to said notch from the outside of the rigid element.

9. The system of articulation as claimed in any one of claims 5 to 8, **characterized in that**, on the outer face of said wall and opposite the open end of the receptacle, said notch opens out into a concave (or convex) surface of revolution (44), and **in that** the end of the other rigid element comprises a convex (or concave) surface of revolution (43) of complementary size and shape.

10. The system of articulation as claimed in any one of claims 1 to 9, **characterized in that** said bearing faces have at least one pair of complementary reliefs suitable for engaging in a selected relative angular position of the two rigid elements (7, 8).

11. The system of articulation as claimed in any one of claims 1 to 10, **characterized in that** said rigid elements (7, 8) are respectively a spectacle side-piece and a spectacle face.

12. The system of articulation as claimed in any one of claims 1 to 10, **characterized in that** one at least of the rigid elements (70) comprises, at its end opposite to the articulation (A), a joining means (71) capable of engaging temporarily with a complementary joining means (81') provided on another element (80').

13. The system of articulation as claimed in any one of claims 1 to 10 and 12, **characterized in that** said rigid elements belong to an articulated train for use in robotics.

## Patentansprüche

1. Gelenksystem, umfassend mindestens einen Schwenkpunkt zwischen einem Ende eines ersten starren Elements (7) und einem Ende eines zweiten starren Elements (8), wobei diese Enden Anlageflächen aufweisen, die paarweise zusammengepasst werden können, wobei elastische Mittel vorgesehen sind, um das gegenseitige Anliegen dieser Flächen aufrecht zu erhalten, **dadurch gekennzeichnet, dass** das System zwei Gelenkstücke (1, 2) aufweist, die jeweils eine ausgesparte Zone besitzen, die durch eine mindestens teilweise gekrümmte Fläche (6) begrenzt ist, wobei jedes dieser Gelenkstücke jeweils von einem dieser starren Elemente abhängt, wobei diese Gelenkstücke im wesentlichen zueinander senkrecht sind und durch gegenseitige Durchdringung ihrer jeweiligen ausgesparten Zone so ineinander gesteckt sind, dass sie nach der Art von Kettengliedern zueinander verschwenkbar sind, so dass das System zwei immaterielle Schwenkpunkte (P1, P2) besitzt, die in den beiden zueinander senkrechten Ebenen der Gelenkstücke (1, 2) in den Grenzen, die ihnen die ausgesparten Zonen (6) gestatten, beweglich sind, und das System außerdem Mittel (19a-c) aufweist, die das Verschwenken nur in einer Ebene oder in Ebenen zulassen, deren Anzahl und Ausrichtung bestimmt sind.

2. Gelenksystem nach Anspruch 1, **dadurch gekennzeichnet, dass** die Gelenkstücke die Form eines Rings (2), einer Schleife, eines Hakens (1) oder einer polygonalen Platte (3) mit einer Aussparung (5) annehmen, die durch eine mindestens teilweise gekrümmte Fläche (6) begrenzt ist.

3. Gelenksystem nach Anspruch 1 oder 2, **dadurch gekennzeichnet, dass** die die ausgesparte Zone begrenzende, mindestens teilweise gekrümmte Fläche (6) jedes der Gelenkstücke kreisförmig ist.

4. Gelenksystem nach einem der Ansprüche 1 bis 3, **dadurch gekennzeichnet, dass** mindestens in eines der Enden der starren Elemente (7, 8) eine gelenkseitig offene Aufnahme (9, 23) integriert ist, die mit einem Zug (14, 28) versehen ist, dessen eines Ende (16, 30) in dieser Aufnahme gefangen ist und dessen anderes Ende (1, 2) eines der Gelenkstücke bildet, wobei die elastischen Mittel (18, 31) mit diesem Zug zusammenwirken, um die Anlageflächen (33, 36; 34, 36; 35, 36) der starren Elemente zu zwingen, miteinander in Kontakt zu bleiben.

5. Gelenksystem nach einem der Ansprüche 1 bis 4, **dadurch gekennzeichnet, dass** in mindestens eines der Enden der starren Elemente (1, 2) eine gelenkseitig offene Aufnahme integriert ist und die Wand dieser Aufnahme mindestens einen axialen Ausschnitt (19a, 19b) aufweist, dessen Größe und Geometrie einem Gelenkstückteil (32) gestatten, von dem offenen Ende dieser Aufnahme aus in diesen Ausschnitt einzutreten.

6. Gelenksystem nach einem der Ansprüche 1 bis 5, **dadurch gekennzeichnet, dass** auf einem der Gelenkstücke ein Antidrehrelief (32) vorgesehen ist.

7. Gelenksystem nach Anspruch 6, **dadurch gekennzeichnet, dass** das Antidrehrelief (32) den Gelenkstückteil bildet, der in den oder die Ausschnitte eintreten kann.

8. Gelenksystem nach einem der Ansprüche 5 bis 7, **dadurch gekennzeichnet, dass** die Wand Schrägflächen (41) für den Zugang zu dem Ausschnitt von außerhalb des starren Elements aufweist.

9. Gelenksystem nach einem der Ansprüche 5 bis 8, **dadurch gekennzeichnet, dass** der Ausschnitt sich auf der Außenseite der Wand und auf der dem offenen Ende der Aufnahme entgegengesetzten Seite zu einer konkaven (oder konvexen) Rotationsfläche (44) ausweitet und dass das Ende des anderen starren Elements eine konvexe (oder konkave) Rotationsfläche (43) von ergänzender Form und Größe aufweist.

10. Gelenksystem nach einem der Ansprüche 1 bis 9, **dadurch gekennzeichnet, dass** die Anlageflächen mindestens ein Paar von ergänzenden Reliefs aufweisen, die dafür ausgelegt sind, in einer ausgewählten relativen Winkelstellung der beiden starren Elemente (7, 8) in Eingriff zu kommen.

11. Gelenksystem nach einem der Ansprüche 1 bis 10, **dadurch gekennzeichnet, dass** die starren Elemente (7, 8) ein Brillenbügel bzw. ein Brillengestellmittelteil sind.

12. Gelenksystem nach einem der Ansprüche 1 bis 10, **dadurch gekennzeichnet, dass** mindestens eines der Elemente (70) an seinem dem Gelenk (A) entgegengesetzten Ende ein Verbindungsmittel (71) aufweist, das mit einem auf dem anderen Element (80') vorgesehenen ergänzenden Verbindungsmittel (81') in vorübergehenden Eingriff kommen kann.

13. Gelenksystem nach einem der Ansprüche 1 bis 10 und 12, **dadurch gekennzeichnet, dass** die starren Elemente zu einer Gelenkfolge zur Verwendung in der Robotik gehören.
